# EUROPEAN PATENT APPLICATION

(11) **EP 1 321 860 A1**
(43) Date of publication of application: **25.06.2003**
(21) Application number: 01310580.4
(22) Date of filing: 19.12.2001
(51) Int. Cl.: G06F 17/30

(54) **Apparatus for information retrieval**

(71) Applicant: Visit 4 Limited, Newmarket, Suffolk, CB8 8TG (GB)
(72) Inventor: Gilbert, Hugh Heathcote, Newmarket, Suffolk, CB8 8TG (GB)
(74) Representative: Hanson, William Bennett

(57) **Abstract**

Disclosed is a method and system for facilitating the retrieval of information concerning products and/or services provided by a plurality of mutually unrelated providers. A single website (1), accessible by consumers, includes means for retrieving said information. The address of the website may be included in each of a plurality of advertisements (4) for the respective products and/or services. The information may be retrieved by means of hyperlinks to websites of the providers. Details of consumers retrieving the information are logged in a database.

## Description

The present invention relates to a system for facilitating the retrieval by consumers of information, only a part of the information being known to a consumer.

Advertisements are necessarily short and punchy. Further information is normally advertised as being available from the company's website, brochure etc.

The first time one sees an advertisement it is difficult to remember the information conveyed about the product or service, let alone the contact number or website.

In a period of viewing a multiplicity of advertisements, a multiplicity of websites and contact numbers will be advertised, all easily forgotten.

Even if web site addresses are remembered it is frequently the case that the address given is that of the company website and does not bear any relation to the particular promotion.

Website addresses, even when remembered are easily misspelled or have the wrong suffix. It is also possible to find oneself viewing an unofficial or fraudulent website instead of the desired official website.

Often, advertisements are entertaining in themselves and it would frequently be interesting to know the title of the accompanying music or the location.

The present invention provides apparatus for information retrieval according to claim 1.

In the preferred embodiment, the information retrieval means operates when a consumer identifies a brand name or, for example by means of one or more keywords, part of the content of a piece of information, in particular, an advertisement. If the consumer's input is specific, only information concerning the specific product or service is retrieved, i.e. the hyperlinks are "tight". If the consumer's input is not specific to one advertisement, product or service, then information concerning a range of products and/or services is retrieved.

The providers subscribe to the internet site defined by the server and may be charged for the subscription. Having subscribed, the providers may optionally include information identifying said internet site, such as the address thereof, in their advertisements.

The means for retrieving the information may comprise a plurality of hyperlinks to websites of the providers, i.e. said internet site may comprise a portal. Alternatively or additionally, said internet site may include information concerning the products and services.

In the most preferred embodiment, a consumer wishing to retrieve said information is required to input anonymous personal details including his or her gender, postcode, age and an identifying anonymous username, and said details are added to a database. Preferably, consumers in the database are categorized according to their products or services of interest.

Preferably, any consumer attempting to retrieve information from a non-subscribing provider is presented with a range of products or services similar to a product or service of said non-subscribing provider, said similar products or services being advertised by subscribing providers. Said range could comprise a ranking of products or services based on levels of charges levied to the subscribing providers. Non-subscribing providers are preferably informed, for example by e-mail, when there have been potential customers looking for their product or service.

The present invention also provides a system for facilitating the retrieval of information concerning products and/or services provided by a plurality of mutually unrelated providers, comprising a single internet site, the address of which internet site may be included in each of a plurality of advertisements for the respective products and/or services, said internet site being accessible by consumers and including means for retrieving said information.

Said advertisements may include television advertisements, radio advertisements, internet advertisements and advertisements in printed media.

Preferably, said internet site further includes means for retrieving information concerning categories of products and/or services provided by all subscribing providers.

Advantageously, said internet site further includes information relating to one of more of the advertisements themselves.

Said information may include music titles, hyperlinks to stores to buy a recording of the theme tune, hyperlinks to stores to purchase a product shown, or a product shown incidentally in the advertisement as an accessory, filming locations and hyperlinks to websites advertising holidays in said filming locations.

Said internet site may even comprise downloadable files comprising complete copies of the advertisements.

It will thus be seen that the invention provides a valuable means of generating direct sales of products and services advertised via various media.

Revenue is immediately obtainable from advertisers and linked sites. Additionally, the internet site of the invention will be a popular website so it can host its own advertising.

Preferably, the apparatus of the invention includes a database comprising personal details including at least the gender, age and an identifying anonymous username of consumers who have retrieved information, the database being categorized according to the products and/or services which said information concerns. This will give an extremely powerful marketing database.

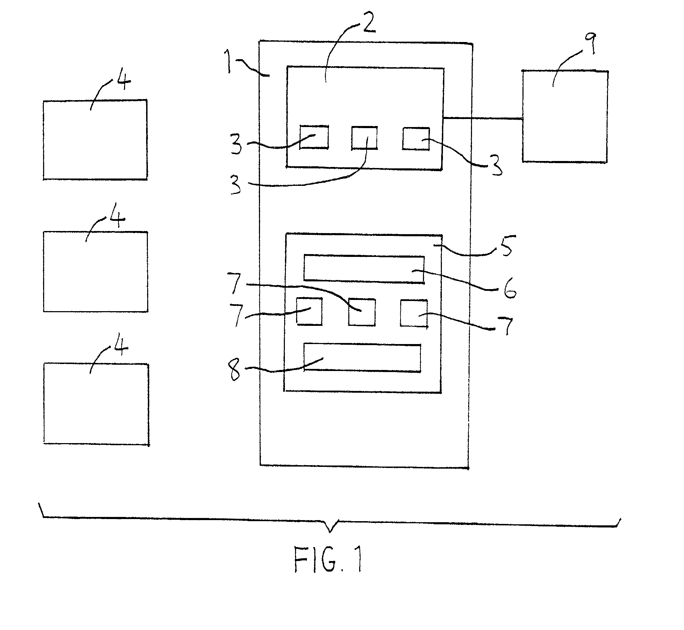

In order that the present invention may be more readily understood, a particular embodiment thereof will now be described, by way of example only, with reference to the accompanying drawing, the single figure of which is a block diagram of apparatus according to the invention.

In this example, apparatus facilitating information retrieval comprises a web server 1 embodying a website having a particular address. The web server includes information retrieval means 2 comprising hyperlinks 3 to a number of sites belonging to subscribing advertisers of products and services.

In order to subscribe to the website, an advertiser or advertising agency or other person or company uses a password to access the website and is presented with an on-screen form. This form enables the subscriber to input information relating to their advertisements, such as the name of the product or service, the category of the produce or service, the date and circumstances of the presentation of the advertisement, the identity of the creator of the advertisement, details of the theme music, location etc, one or more pictures of the advertisement and keywords describing the content of the advertisement.

Subscribing advertisers may be invited to include the address of the website 1 in their advertisements 4, for example stating that further information is available from the website. However, it is not essential that the address of the website 1 is included in the advertisements 4. As an alternative, a logo or other means may be used to identify the website 1. Indeed, no identification at all is necessary. However, if subscribers are charged, in order to encourage them to identify the website 1 in their advertisements 4, those doing so could be charged a lower amount than those who do not.

If a consumer sees a product advertised that he or she finds interesting but is unable to remember details of the product, even after the first viewing the consumer can access the website 1, where he or she will be reminded and full details can be found. It is unnecessary to remember the particular product's web site address or even its brand name or category -these can always be found at the website 1, as long as some key information identifying the advertisement is remembered, matching the keywords previously uploaded in association with the respective advertisement.

Thus the website 1 provides a means for locating an advertisement when only very little thereof is remembered, as commonly occurs.

Advertisers not subscribing to the website 1 are at a significant disadvantage when compared to those in the same product category who have subscribed. If a consumer looks for a non-subscribing advertiser the information retrieval means 2 will present him or her with a range of similar products being advertised by subscribers (there is a ranking in this range, based on fees charged to the subscribers). Non-subscribers will be e-mailed that there have been potential customers looking for their product.

A consumer searching for a particular category of product, for example a car, is able to log on to the website 1 to see all the cars currently being advertised.

Additionally the site includes a part 5 giving information 6 about the advertisements themselves (often as appealing as the products). The advertisement information 6 may include music titles, links to stores to buy a recording of the theme tune and/or links to stores to purchase a product shown incidentally in the advertisement as an accessory. Filming locations and links to package holidays in the area can also be provided.

Providing copyright is satisfied, a visitor can also download, from part 5, files 7 embodying complete copies of the advertisements 4 onto DVD for his or her own entertainment.

In a history section 8 of part 5 famous advertisements will be available, many of which are artworks in their own right, with associated information and downloading ability.

The most valuable part of the business of the invention is likely to be its consumer database 9. Subscribers wishing to see product details will be asked for their gender, postcode, age and an identifying anonymous username, as a minimum, which will be logged on the database 9 neatly segregated by category of product chosen By this means the consumer's personal identity is kept private. However, he or she can interact anonymously with an advertiser and advertisers can be given a profile from the details given, though not the specific identity of consumers.

The invention is not limited to the specific embodiment which has been described above, and modifications thereto, which do not depart from the scope of the invention as defined by the following claims, will readily occur to those skilled in the art.

## Claims

1. Apparatus facilitating the retrieval of data provided by a plurality of mutually unrelated product and/or service providers, the retrieval being effected on the basis of parts of pieces of information previously issued to the public in a medium other than the internet by said plurality of mutually unrelated providers, comprising an internet server (1) including means (2) for retrieving said data, said internet server being accessible by consumers, the information retrieving means (2) operating to retrieve information concerning a particular one of said products and/or services when a respective one of said parts of pieces of information is identified by a consumer.

2. Apparatus according to claim 1, wherein said medium comprises at least one of television, radio, and printed media and internet.

3. Apparatus according to claim 1 or 2, wherein said means (2) for retrieving information is operable to retrieve information concerning categories of products and/or services provided by all subscribing providers.

4. Apparatus according to claim 1, 2, or 3, wherein said internet server (1) further includes information (6) relating to at least one of the products and/or services as such.

5. Apparatus according to claim 4, wherein said information relating to at least one of the products and/or services as such includes at least one of a music title, a hyperlink to a website to buy a recording of a theme tune, a hyperlink to a website to buy a product featured in an advertisement or featured as an accessory, a filming location and a hyperlink to a website advertising a holiday in a filming location.

6. Apparatus according to any preceding claim, wherein said internet server (1) comprises at least one downloadable file embodying a complete copy of an advertisement.

7. Apparatus according to any preceding claim, further including a database (9) comprising anonymous personal details including at least gender, postcode, age and an identifying anonymous username of consumers who have retrieved information.

8. Apparatus according to claim 7, wherein consumers in the database (9) are categorized according to their products or services of interest.

9. Apparatus according to any preceding claim, wherein said internet server itself (1) is identifiable by identifying one or more parts of said pieces of information.

10. Apparatus according to claim 9, wherein said one or more parts of said pieces of information comprise an address of said internet server (1).

11. A computer program facilitating the retrieval of data provided by a plurality of mutually unrelated product and/or service providers, comprising the steps of reading a part of a piece of information input by a consumer, the piece of information having previously been issued to the public in a medium other than the internet by one of said plurality of mutually unrelated providers, searching for data relating to said piece of information, retrieving said data, and providing said data to said consumer.
